# EUROPÄISCHE PATENTSCHRIFT

(11) **EP 0 636 653 B1**
(45) Veröffentlichungstag und Bekanntmachung des Hinweises auf die Patenterteilung: **07.01.1998**
(21) Anmeldenummer: 94110856.5
(22) Anmeldetag: 13.07.1994
(51) Int. Cl.: C08L 51/06

(54) **Modifizierte elastomere Polypropylene**
Modified elastomeric polypropylene
Polypropylène élastomère modifié

(30) Priorität: 26.07.1993 AT 1484/93
(43) Veröffentlichungstag der Anmeldung: 01.02.1995
(73) Patentinhaber: PCD-Polymere Gesellschaft m.b.H., A-2323 Schwechat-Mannswörth (AT)
(72) Erfinder: Leistner, Dirk, Dipl.-Chem. Dr., A-4020 Linz (AT); Rätzsch, Manfred, Dr., A-4202 Kirchschlag (AT); Hesse, Achim, Dipl.-Chem. Dr., D-01067 Dresden (DE); Hafner, Norbert, Dipl.-Ing. Dr., A-4020 Linz (AT); Gahleitner, Markus, Dipl.-Ing. Dr., A-4501 Neuhofen (AT); Bernreitner, Klaus, Dipl.-Ing., A-4020 Linz (AT)
(74) Vertreter: Kunz, Ekkehard, Dr.

(56) Entgegenhaltungen:
- EP-A- 0 309 674
- WO-A-93/06175
- US-A- 4 335 225
- DATABASE WPI Derwent Publications Ltd., London, GB; AN 68-02622Q & JP-A-43 006 795 (CHISSO)

## Beschreibung

Die Erfindung betrifft durch Pfropfen modifizierte elastomere Polypropylene, ihre Mischungen mit durch Pfropfen modifizierten isotaktischen Polypropylenen, sowie deren Verwendung als Verträglichkeits- oder Haftvermittler.

Es ist beispielsweise aus der EP-A-280.454, EP-A-317.358, WO 91/5008, US 3,868,433, US 4,260,690, DE-A-41 31 908 bekannt, isotaktische Polypropylene (IPP) mit Pfropfmonomeren, wie z. B. Styrol, Maleinsäureanhydrid (MSA), Acrylsäure und deren Derivaten chemisch zu modifizieren. Durch Pfropfen modifizierte, isotaktische und ataktische Polypropylene sind aus der EP-A-309.674 bekannt. Bei diesen Pfropfreaktionen entstehen Pfropfcopolymere des PP, die gegenüber dem Ausgangs-PP meist eine erhöhte Polarität aufweisen. Diese Produkte finden z. B. als Haftvermittler bei der Metallbeschichtung mit Polyolefinen wie Polyethylen, PP und PP-Copolymeren oder als Verträglichkeitsvermittler in Blends aus Polyolefinen und mit Polyolefinen unmischbaren Polymeren wie z. B. Polyamiden, Polyestern, Polycarbonaten, Polystyrol, Polyacrylaten und Polyurethanen Verwendung. Der Haft- oder Verträglichkeitsvermittler befindet sich bei beiden Einsatzfeldern in der Zwischenschicht zwischen dem Polyolefin und dem Metall bzw. Blendpartner und bewirkt durch chemische und/oder physikalische Kopplung (z. B. Cokristallisation) eine Haftung zwischen den Materialien. Im Falle von PP-Blends mit anderen Thermoplasten, z. B. Polyamid 6 (PA6) werden die mechanischen Eigenschaften wie Schlagzähigkeit, Festigkeit und Steifigkeit (Elastizitätsmodul) maßgeblich von der Struktur der Grenzschicht zwischen den Phasen bestimmt. Beispielsweise weist ein PP/PA6-Blend, der einen Verträglichkeitsvermittler auf Basis eines MSA-gepfropften Styrol-Ethylen/Butylen-Styrol-Triblockcopolymeren (SEBS) enthält, eine relativ hohe Zähigkeit auf (Schlagzähigkeit, Fallbolzentest). Ähnliches Verhalten zeigen Blends aus PP und PA6 unter Einsatz eines MSA-gepfropften Ethylenpropylenkautschuk (EPR) als Verträglichkeitsvermittler. Die erwähnten Verträglichkeitsvermittler, beispielsweise jene vom SEBS-Typ, besitzen allerdings den Nachteil einer aufwendigen und kostspieligen Synthese, da die Copolymerisation in Lösung durchgeführt wird und eine anschließende Pfropfung mit funktionellen Monomeren notwendig ist. Gepfropfter Ethylenpropylenkautschuk besitzt den Nachteil schlechter Fließfähigkeit, da die Pfropfung von einer teilweisen Vernetzung des Ethylenanteils im EPR begleitet wird. Gleiches gilt für gepfropftes EPDM.

Verträglichkeits- oder Haftvermittler auf Basis von gepfropften isotaktischen Polypropylenen besitzen vor allem den Nachteil, daß in zahlreichen Anwendungsfeldern für Thermoplaste, wie z. B. dem Fahrzeug- und Gerätebau die mechanischen Eigenschaften der verwendeten Blends, insbesondere die Zähigkeit nicht ausreichend hoch ist.
Es bestand deshalb zu Aufgabe, Substanzen zu finden, die als Verträglichkeits- oder Haftvermittler für Polyolefine wirken und die insbesondere in Blends von Polyolefinen mit nicht olefinischen Thermoplasten verbesserte mechanische Eigenschaften, insbesondere eine erhöhte Zähigkeit bzw. geringere Sprödigkeit bewirken.

Erfindungsgemäß wird die Aufgabe dadurch gelöst, daß als Haft- oder Verträglichkeitsvermittler Pfropfcopolymere des elastomeren PP (ELPP) bzw. deren Gemische mit Pfropfpolymeren des isotaktischen Polypropylens (IPP) eingesetzt werden.

Gegenstand der Erfindung sind demnach mit ethylenisch ungesättigten Pfropfmonomeren modifizierte elastomere Polypropylene mit stereoregulärer Blockanordnung im Kettenaufbau (ELPP) und deren Mischungen mit mit ethylenisch ungesättigten Pfropfmonomeren modifizierten isotaktischen Polypropylenen (IPP).

Die für die Pfropfreaktionen eingesetzten elastischen Polypropylene sind insbesondere solche, wie sie in der US 4,335,225, US 4,522,982 und US 5,188,768 beschrieben sind. Darunter sind sowohl Homopolymere als auch Copolymere zu verstehen. Sie besitzen im wesentlichen eine stereoreguläre Blockanordnung im Kettenaufbau und bestehen beispielsweise aus Blöcken von isotaktischen und ataktischen Propylensequenzen, die abwechselnd in der Polymerkette angeordnet sind. Auch der Einbau von zusätzlichen Comonomeren in die Polymerkette ist möglich. Die Copolymere können neben Propylen-Einheiten auch andere Olefineinheiten, wie z. B. Ethylen, Buten-, Penten- oder Hexeneinheiten im Molekül enthalten. Ihre Herstellung gelingt beispielsweise gemäß US 4,335,225 durch Polymerisation mit speziellen Katalysatoren, die durch Reaktion oder Mischen von organischen Ti-, Zr- oder Hf-Verbindungen mit einem Metalloxid wie z. B. Al₂O₃, TiO₂, SiO₂ oder MgO erhalten werden. Weiters können die für die Degradierung eingesetzten elastischen Polypropylene beispielsweise auch analog zu US 4,522,982 mit Hilfe von Metallocen-Katalysatoren in Kombination mit Aluminoxanen oder analog zu US 5,118,768 mit Katalysatoren auf Basis von Magnesiumalkoxiden und tetravalentem Titanchlorid in Gegenwart spezieller Elektronendonoren hergestellt werden.
Die elastischen Polypropylene (ELPP) können erfindungsgemäß für sich allein gepfropft werden, oder aber im Gemisch mit anderen, insbesondere isotaktischen Polypropylenen (IPP). Als andere Polypropylene können alle bekannten Polypropylen-Homopolymere bzw. Copolymere mit anderen Olefinen eingesetzt werden. Es ist jedoch auch möglich, ELPP und IPP jeweils getrennt zu pfropfen und die derart modifizierten Polypropylene zu mischen. Die Gemsiche bestehen bevorzugt aus elastischen Polypropylenen mit einem Gehalt von 0 bis 80 Gew.%, besonders bevorzugt 0,5 bis 50 Gew.% an anderen, insbesondere isotaktischen Polypropylenen.

Bei den erfindungsgemäß gepfropften Polypropylenen handelt es sich um Polypropylene, welche entlang der Polymerkette eine oder mehrere chemisch gebundene (aufgepfropfte) funktionelle Gruppen und/oder polymere Ketten aus Monomerbausteinen mit oder ohne funktionellen Gruppen besitzen. ELPP bzw. IPP kann dafür mit ungesättigten Mono- und/oder Dicarbonsäuren, deren Anhydriden, deren Estern mit aliphatischen Alkoholen und Dialkoholen mit einem bis 10 C-Atomen und Glycidylethern, Vinylalkoholestern, sowie Vinylaromaten oder Gemischen aus diesen Monomeren, sowie Gemischen aus diesen Monomeren und Olefinen mit 2 bis 10 C-Atomen gepfropft werden.

Besonders bevorzugt sind dabei Pfropfmonomere aus der Gruppe der ethylenisch ungesättigten aliphatischen oder aromatischen Carbonsäuren oder deren Derivaten, aus der Gruppe der Maleinsäure, Acrylsäure oder Methacrylsäure oder deren Derivaten, sowie aus der Gruppe der Vinylaromaten. Als mögliche Derivate sind dabei beispielsweise Ester, Anhydride, Säurehalogenide, Amide, Imide oder Oxazoline zu verstehen.

So lassen sich beispielsweise ELPP, IPP oder Mischungen aus ELPP und IPP in Lösung oder Schmelze über die radikalische Pfropfcopolymerisation mit Acrylsäure bzw. ihren Derivaten wie Methylmethacrylat, Butylacrylat, tert.-Butylacrylat, Glycidylacrylat, Glycidylmethacrylat, Acrylsäure-2-hydroxyethylester, oder mit Maleinsäure und ihren Derivaten, wie Maleinsäureanhydrid (MSA), Maleinsäuremono- und Diestern mit Methanol, Ethanol, Butanol und Hexanol zu säure-, säureanhydrid-, säureester-, hydroxyester- und glycidylethermodifiziertem ELPP bzw. IPP umsetzen. Ebenso möglich ist die Herstellung von Pfropfcopolymeren aus ELPP und IPP und Derivaten des Vinylalkohols, vorzugsweise Ester mit aliphatischen Carbonsäuren, z. B. Vinylacetat. Eine weitere Gruppe bilden die Pfropfprodukte mit Vinylaromaten, z. B. Styrol. Weiterhin ist es möglich, ELPP bzw. IPP mit Gemischen von Pfropfmonomeren in beliebiger Zusammensetzung, wie z. B. Gemischen aus verschiedenen Acrylsäurederivaten, Gemischen aus Acrylsäurederivaten und Maleinsäurederivaten, Gemischen aus Acrylsäurederivaten und Vinylalkoholderivaten, Gemischen aus einerseits Acrylsäurederivaten und/oder Maleinsäurederivaten und/oder Vinylalkoholderivaten und andererseits Vinylaromaten, wie z. B. Styrol, und/oder alpha-Olefinen mit 2 bis 10 C-Atomen zu ELPP-Pfropfcopolymeren bzw. Gemischen von ELPP/IPP-Pfropfcopolymeren umzusetzen.

Der Pfropfgrad, das ist der Gehalt der gepfropften Polypropylene an Pfropfmonomeren, beträgt vorteilhafterweise etwa 0,1 bis 30 Gew.%, bevorzugt 0,5 bis 10 Gew.%, und besonders bevorzugt 0,5 bis 5 Gew.%.

Die Herstellung der erfindungsgemäßen ELPP- bzw. ELPP/IPP-Pfropfcopolymere kann nach Verfahren der radikalischen Pfropfcopolymerisation wie sie beispeislweise für IPP in EP-A-280.454, EP-A-317.358, WO 91/5008, US3,868,433, US 4,260,690, DE-A-41 31 908 beschrieben sind, durch Pfropfen von ELPP oder Mischungen aus ELPP und IPP mit ethylenisch ungesättigten Pfropfpolymeren erfolgen. Die Pfropfreaktion gelingt beispielsweise in Lösung, vorzugsweise in aromatischen Kohlenwasserstoffen im Temperaturbereich von 50 bis 200°C, vorzugsweise zwischen 80 und 150°C, oder in der Schmelze, vorzugsweise in Extrusionsmaschinen im Temperaturbereich von 170 bis 300°C, vorzugsweise zwischen 200 bis 250°C. Dabei ist es vorteilhaft, die Radikalerzeugung am Polymer durch Radikalinitiatoren wie z. B. Peroxide oder Azoverbindungen und/oder durch energiereiche Strahlung wie Gamma- oder Elektronenstrahlung zu initiieren.

Ein weiterer Gegenstand der Erfindung ist die Verwendung von erfindungsgemäß modifizierten ELPP oder deren Mischungen mit modifizierten IPP als Verträglichkeits- oder Haftvermittler für Polyolefine, insbesondere in Blends aus Polyolefinen mit nichtolefinischen Thermoplasten, bzw. als Haftvermittler in Polyolefin-Metallverbunden. Die erfindungsgemäßen ELPP- bzw. ELPP/IPP-Pfropfcopolymere können insbesondere in Blends aus einerseits Polyethylen, IPP, bzw. seinen Copolymeren mit Ethylen und anderen alpha-Olefinen und andererseits nichtolefinischen Thermoplasten, beispielsweise aus der Gruppe der Polyamide, Polyester, Polycarbonate, Polystyrene, Polyacrylate und Polyurethane, als Verträglichkeitsvermittler eingesetzt werden.

Ein weiterer Gegenstand der Erfindung sind Blends aus Polyolefinen und nichtolefinischen Thermoplasten, die die erfindungsgemäßen ELPP und/oder ELPP/IPP-Pfropfcopolymere als Verträglichkeitsvermittler enthalten. Die erfindungsgemäßen. Blends zeigen bessere mechanische Eigenschaften, beispielsweise höhere Zähigkeitswerte (Doppel-V-Schlagzähigkeit, Fallbolzentest) und geringere Steifigkeitswerte als Blends der gleichen Zusammensetzung mit gepfropftem IPP als Verträglichkeitsvermittler. Die erfindungsgemäßen Blends können weiters gebräuchliche Additive, wie z. B. Verarbeitungs- und Langzeitstabilisatoren, Nukleierungsmittel, Verstärkungsstoffe und Füllstoffe wie z. B. Talkum, Kreide oder Kaolin enthalten. So ergeben sich z. B. Vorteile, wenn die erfindungsgemäßen Blends 2 bis 50 Gew.%, vorzugsweise 10 bis 40 Gew.% Talkum oder 1 bis 40 Gew.% Verstärkungsfasern, beispielsweise Glasfasern oder Kohlefasern enthalten.

Die erfindungsgemäßen Blends enthalten etwa 0,1 bis 30 Gew.% der erfindungsgemäßen Verträglichkeitsvermittler. Bevorzugt werden 1 bis 15 Gew.%, besonders bevorzugt 2 bis 10 Gew.% Verträglichkeitsvermittler eingesetzt. Das Mischungsverhältnis von Polyolefin zu nichtolefinischen Thermoplasten erstreckt sich über den gesamten möglichen Mischungsbereich und liegt bei etwa 5 bis 95 Gew.%, bevorzugt 30 bis 80 Gew.% Polyolefin und 5 bis 95 Gew.%, bevorzugt 20 bis 70 Gew.% nichtolefinischer Thermoplast. Die Blends werden beispielsweise in Extrusionoder Spritzguß für Folien oder Formkörper eingesetzt.

Im folgenden sind beispielhaft besonders vorteilhafte Kombinationen von erfindungsgemäßen Verträglichkeitsvermittlern für spezielle Blends zusammengestellt:
a) MSA-gepfropfte ELPP, MSA-co-Styrengepfropfte ELPP und acrylsäuregepfropfte ELPP für Blends aus IPP und seinen Copolymeren mit Polyamiden beispielsweise PA 6, PA 6,6 und deren Copolymere mit aromatischen Bausteinen wie z. B. Phthalsäure, Terephthalsäure, Isophthalsäure, p-, o- und m-Phenylendiamin, aromatische Aminocarbonsäuren, wie z. B. p-, o- und m-Aminobenzoesäure und weiteren aromatischen Disäuren, Diaminen und Aminocarbonsäuren mit mehr als einem aromatischen Ring,
b) MSA-gepfropfte ELPP für Blends aus IPP und seinen Copolymeren mit Polyestern, beispielsweise Polyalkylenterephthalate wie z. B. Polyethylenterephthalat (PET) oder Polybutylenterephthalat (PBT) und deren Copolymere mit zusätzlichen Comonomeren wie z. B. p-Hydroxybenzoesäure, Isophthalsäure und/oder zusätzlichen aliphatischen Diolen und Diphenolen, sowie Blends mit vollaromatischen Polyestern,
c) MSA-gepfropfte ELPP für Blends aus IPP und seinen Copolymeren mit thermoplastischen Polyurethanen,
d) glycidylmethacrylat- und glycidylacrylatgepfropfte ELPP für Blends aus IPP und seinen Copolymeren mit Polyestern, beispielsweise Polyalkylenterephthalate (PET, PBT) und deren Copolymere mit zusätzlichen Comonomeren wie unter b, sowie Blends mit vollaromatischen Polyestern,
e) weitere ELPP-Pfropfcopolymere mit Acrylsäurederivaten, wie z. B. Methylmethacrylat, Butylacrylat, Hydroxyester der Acrylsäure, Acrylsäure, Oxazolinderivate der Acryl- und Methalcrylsäure für Blends aus IPP und seinen Copolymeren mit Polyestern, beispielsweise Polyalkylenterephthalate (PET, PBT) und deren Copolymere mit zusätzlichen Comonomeren wie unter b, sowie Blends mit vollaromatischen Polyestern,
f) vinylacetatgepfropfte ELPP für Blends aus IPP und seinen Copolymeren mit Polyestern, beispielsweise Polyalkylenterephthalate (PET, PBT) und deren Copolymere mit zusätzlichen Comonomeren wie unter b, sowie Blends mit vollaromatischen Polyestern,
g) glycidylmethacrylat- und glycidylacrylatgepfropfte ELPP für Blends aus IPP und seinen Copolymeren mit Polycarbonaten,
h) styrengepfropfte ELPP für Blends aus IPP und seinen Copolymeren mit Polystyren und seinen Copolymeren,
i) styrengepfropfte ELPP für Blends aus IPP und seinen Copolymeren mit Polycarbonaten und seinen Copolymeren,
j) glycidylmethacrylat- und glycidylacrylatgepfropfte ELPP und weitere ELPP-Pfropfcopolymere mit Acrylsäurederivaten, wie z. B. Methylmethacrylat, Butylacrylat, Hydroxyester der Acrylsäure, Acrylsäure für Blends aus IPP und seinen Copolymeren mit Polyacrylaten und Polymethylmethacrylaten,
k) Gemisch aus 50 bis 99,5 Gew.% MSA-gepfropften ELPP und 0,5 bis 50 Gew.% gepfropftem IPP für Blends aus IPP und seinen Copolymeren mit Polyamiden.

### I. Herstellung der elastomeren Polypropylene

### Beispiel A:

### a) Herstellung des Katalysators

44,22 g eines graubraun gefärbten Tetraneophylzirkon (TNZ; Tm= 66°C, Du Pont) wurden unter Reinststickstoffatmosphäre in 620 ml n-Hexan, gereinigt mittels eines Cu-Katalysators (BASF-Katalysator R 3-11 bei 70°C) zur Sauerstoffentfernung und 4-bzw. 10A-Molekularsieb zur Entfernung von Wasser und polaren Verunreinigungen bei 20°C in einem Schutzgaskolben gelöst. Die erhaltene Suspension wurde nach Absetzen des größten Teils des unlöslichen Rückstands nach 15 min über eine Glasfritte in einen auf -40°C gekühlten, gerührten Schutzgasglaskolben (ausgeheizt bei über 150°C und mit Reinststickstoff (unter 2ppm O₂) gespült) filtriert. Der Kolben wurde nach Abschluß der Filtration (Dauer ca. 140 min) noch 15 min unter Rühren bei - 40°C gehalten, um das TNZ möglichst quantitativ auszufallen. Nach Absetzen des TNZ wurde die überstehende Lösung mittels einer Filterkerze unter N₂-Überdruck in einen weiteren gekühlten Schutzgaskolben filtriert. Das verbliebene TNZ wurde in weiteren 350 ml n-Hexan bei ca. 5 - 10°C während 15 min gelöst und nach Abkühlen auf - 34°C erneut ausgefällt.
Nach Absetzen des TNZ-Niederschlags wurde die Lösung wieder mittels N2-Überdruck über eine Glasfilterkerze in den gekühlten Schutzgaskolben mit der ersten Mutterlauge filtriert. Anschließend wurde das TNZ durch Anlegen eines Ölpumpenvakuums (unter 1.10⁻² mbar) über zwischengeschaltete mit Flüssigstickstoff gekühlte Kühlfallen getrocknet. Das gereinigte TNZ zeigte einen Schmelzpunkt von 68°C und war weiß bis cremefarben. Die gesammelten Mutterlaugen wurden auf ca. 200 ml eingeengt und das noch gelöste TNZ durch Kühlen auf -40°C ausgefällt. Nach erneuter Druckfiltration über eine Filterkerze wurde das TNZ erneut in 100 ml Hexan gelöst, erneut bei -40°C ausgefällt, abfiltriert und mittels Vakuum wie oben getrocknet. Die Gesamtausbeute dieses Reinigungsprozesses betrug 82,2 %. Alle Operationen wurden unter Reinststickstoff durchgeführt.

In einen 61-4-Hals-Schutzgaskolben wurden 266,7 g konditioniertes Al₂O₃ (Alumina C von DEGUSSA, konditioniert bei ca. 800 - 1000°C im N2-Strom und nach Lagerung bei einer rel. Luftfeuchte von 50 % und 23°C während 16 h und erneuter Trocknung zur Einstellung einer optimalen Hydroxylkonzentration an der Oberfläche von ca. 1 mmol/g Alumina C bei 400°C im Stickstoffstrom) eingewogen und mit 5035 ml n-Hexan, gereinigt mittels BASF-Katalysator R 3 - 11 und 4- bzw. 10A-Molekularsieb, versetzt. Die Suspension wurde ca. 1 h bei 300U/min gerührt. Dann wurden die oben hergestellten 33,23 g TNZ (ohne Produkt aus aufgearbeiteter Mutterlauge) in 465 ml n-Hexan (gereinigt wie oben) bei 20°C gelöst und diese TNZ-Lösung ehest unter fortwährendem Rühren zur Al₂O₃-Suspension während 50 min zugetropft, wobei nach Zugabe von wenigen ml TNZ-Lösung eine deutliche Viskositätsverminderung der Suspension eintrat. Nach Zugabe der TNZ-Lösung wurde die Drehzahl auf ca. 120 U/min verringert und weitere 12,5 h unter Lichtschutz gerührt. Zur Beschleunigung der Filtration wurde der erhaltene Katalysatorfeststoff 1 h absitzen gelassen und schließlich die Lösung mittels einer Druckfiltration über eine Glasfritte abgetrennt (Dauer 3 h). Anschließend wurde der Katalysatorfeststoff durch Anlegen eines Vakuum von unter 1.10⁻² mbar (Öldiffusionspumpe mit zwei zwischengeschalteten, flüssigstickstofigekühlten Kühlfallen) unter Rühren bis zur Gewichtskonstanz von 292 g getrocknet (Dauer ca. 5 h). Alle Operationen wurden unter Reinststickstoff durchgeführt. Der erhaltene TNZ/Al₂O₃-Katalysator zeigte eine beige bis hellbraune Färbung und war ein frei fließendes Pulver, das eine Tendenz zur Bildung von kleinen Kugeln mit ca. 1 mm Durchmesser aufwies. Der Zr-Gehalt betrug 1,66 Gew.%.

### b) Polymerisation:

Ein bei 160°C und 0,1 mbar ausgeheizter 20 l-Doppelmantelreaktor mit wandgängigem, oberflächenpoliertem Rührer, Thermostatmantel, Temperatur-, Drehzahl- und Drehmomentmessung wurde nach drei Propen/Vakuumspülzyklen mit 7,3 kg Propen bei 25°C befüllt. Nach Hochfahren des Rührwerks auf 400 U/min wurden 10,02 g des gemäß a) hergestellten Katalysators mit 300 ml Flüssigpropen (ca. 20°C) eingespült und die Drehzahl nach 2 min auf 260 U/min reduziert. Anschließend wurde innerhalb von ca. 10 min die Propentemperatur auf 60°C erhöht und diese Temperatur ab Zugabe des Katalysators 120 min gehalten. Anschließend wurde die Rührerdrehzahl auf 200 U/min gesenkt und 1880 g auf ca. 50°C vorgewärmtes Aceton mittels Stickstoffüberdruck innerhalb von 3 min in den Reaktor eingebracht. Nach Erhöhung der Rührerdrehzahl auf 400U/min für ca. 2 min und anschließendes Senken auf 100 U/min wurde innerhalb von 20 min das nicht verbrauchte Propen bei 60 bis 46 °C abgeflasht. Der verbleibende ELPP (elastomeres Polypropylen)-Acetonslurry war rührbar und konnte über den 1-zölligen Bodenauslaß des Reaktors abgelassen werden.
Nach Filtration des ELPP und Trocknen im Stickstoffstrom bei 50°C erhielt man 1,88 kg eines pulvrig-krümeligen, nicht klebrigen ELPP mit einem Schmelzpunkt (Tm) von 148,1°C (gemessen mit einem Du Pont Differential Scanning Calorimeter 910/20 (Thermal Analyst 2100)), entsprechend einem bilanzierten Zr-Gehalt von 89 ppm und einem Al₂O₃-Gehalt von 0,49 Gew.%. Das ELPP wies einen MFI (melt flow index demäß ISO 1133/DIN 53735 bei 230°C/2,16 kg von kleiner 0,01 g/10 min auf.

### Beispiel B:

Das gemäß Beispiel A erhaltene elastische Polypropylen wurde auf einer Brechmühle nach Abkühlung auf unter 0°C bis zu einer Korngröße von unter 3 mm gemahlen. Anschließend wurden 0,2 Gew.% Bis(2(1,1 dimethylethyl)peroxyisopropyl)benzol (Perkadox 14SFI, Fa. Akzo), bezogen auf die Menge des Polypropylens, eingemischt, das Gemisch auf einem 18 mm Brabender-Einschneckenextruder bei 190°C aufgeschmolzen und mit einem Ausstoß von 1 kg/h über eine Runddüse zu einem Strang von 3 mm Durchmesser extrudiert. Die Verweilzeit im Extruder betrug etwa 1 min. Der Strang wurde nach Erstarrung in einem Wasserbad granuliert. Dabei wurde das elastische Polypropylen bis zu einen MFI von 25 g/10 min degradiert. Die Messung des MFI erfolgte gemäß ISO 1133/DIN 53735 bei 230°C/2,16 kg.

### II. Herstellung der Verträglichkeitsvermittler:

### Beispiel 1:

In einem ölbadbeheizten 2I-Rührgefäß mit Rückflußkühler, Stickstoffeinleitung, gasdichtem Rührer und Tropftrichter wurden 50 g elastomeres PP gemäß Beispiel A (MFI: unter 0,01) in 1250 ml Xylen (Isomerengemisch) unter Stickstoffstrom und Rührung bei 120°C gelöst und anschließend mit 60 g Maleinsäureanhydrid (MSA) versetzt. In die Lösung wurden bei 130°C innerhalb 60 min 40 g Benzoylperoxid, gelöst in 100 ml Xylen, eingetropft. Die Lösung wurde weitere 60 min gerührt und nach Abkühlung auf 80°C in 2,5 1 Aceton gegeben. Das ausgefallene Pfropfcopolymer wurde abgesaugt, in 2,5 1 Aceton gewaschen, erneut abgesaugt und bei 80°C 8 Stunden im Vakuum getrocknet.
Der IR-spektroskopisch bestimmte MSA-Pfropfgrad betrug 1,2 Gew.% bezogen auf die Gesamtmenge.

### Vergleichsbeispiel V1:

Analog zu Beispiel 1 wurde ein Verträglichkeitsvermittler hergestellt, wobei jedoch an Stelle von ELPP 100 g isotaktisches PP (IPP, Daplen B-Pulver, Reaktorprodukt, PCD Polymere, MFI: kleiner 0,01) in 1250 ml Xylen mit 60 g MSA und 40 g Benzoylperoxid umgesetzt wurden. Der IR-spektroskopisch bestimmte MSA-Pfropfgrad betrug 1,3 Gew.% bezogen auf die Gesamtmenge.

### Beispiel 2:

Analog zu der unter Beispiel 1 beschriebenen Verfahrensweise wurden 100 g eines elastomeren Polypropylens (ELPP) gemäß Beispiel B mit MFI: 25, gelöst in 650 ml Xylen, mit 40 g MSA und 20 g Benzoylperoxid umgesetzt. Der MSA-Pfropfgrad betrug 2,9 Gew.% bezogen auf die Gesamtmenge.

### Vergleichsbeispiel V2:

Analog zu Beispiel 1 wurden 100 g eines isotaktischen Polypropylens (Daplen RT 551, PCD Polymere) mit MFI: 28, gelöst in 650 ml Xylen, mit 60 g MSA und 40 g Benzoylperoxid umgesetzt. Der MSA-Pfropfgrad betrug 2,7 Gew.% bezogen auf die Gesamtmenge.

### Beispiel 3:

Analog zu der unter Beispiel 1 beschriebenen Verfahrensweise wurden 100 g eines elastomeren Polypropylens gemäß Beispiel B mit MFI 25, gelöst in 650 ml Xylen, mit 40 g Glycidylmethacrylat (GMA, Fa. Fluka Chemie) und 20 g Benzoylperoxid umgesetzt. Der IR-spektroskopisch bestimmte GMA-Pfropfgrad betrug 1,9 Gew.% bezogen auf die Gesamtmenge.

### Vergleichsbeispiel V3:

Analog zu der in Beispiel 1 beschriebenen Verfahrensweise wurden 100 g isotaktisches PP (IPP, Daplen RT 551, PCD Polymere, MFI: 28) in 750 ml Xylen mit 40 g GMA und 20 g Benzoylperoxid umgesetzt. Der IR-spektroskopisch bestimmte GMA-Pfropfgrad betrug 2,0 Gew.% bezogen auf die Gesamtmenge.

### Beispiel 4:

Analog zu der unter Beispiel 1 beschriebenen Verfahrensweise wurden 100 g eines elastomeren Polypropylens gemäß Beispiel B mit MFI: 25, gelöst in 650 ml Xylen, mit 40 g Styren und 20 g Benzoylperoxid umgesetzt. Der gravimetrisch ermittelte Styrenpfropfgrad betrug 10,4 Gew.% bezogen auf die Gesamtmenge.

### Vergleichsbeispiel V4:

Analog zu der unter Beispiel 1 beschriebenen Verfahrensweise wurden 100 g eines isotaktischen Polypropylens (Daplen RT 551, PCD Polymere) mit MFI: 28, gelöst in 650 ml Xylen mit 50 g Styren und 20 g Benzoylperoxid umgesetzt. Der gravimetrisch ermittelte Styrenpfropfgrad betrug 9,8 Gew.% bezogen auf die Gesamtmenge.

### III. Herstellung der Blends:

### Beispiel 5:

Polypropylen/Polyamid 6-Blend unter Verwendung des ELPP-Pfropfcopolymeren gemäß Beispiel 1 als Verträglichkeitsvermittler (VM), Blendzusammensetzung IPP/PA6/VM = 60/35/5 Gew.%.
Eine Mischung aus 3000 g IPP (Daplen BE 50, PCD Polymere, MFI: 0,3), 1750 g Polyamid 6 (SH3, Fa. Leuna Werke AG, Viskositätszahl nach DIN 53727: 140 ccm/g in 96 %iger Schwefelsäure) und 250 g ELPP-Pfropfcopolymer gemäß Beispiel 1 wurden mit einer Massetemperatur von 255°C in einem Berstorff ZE 25-Doppelschneckenextruder (L/D = 49,5) mit 5 kg/h Massedurchsatz extrudiert, im Wasserbad abgeschreckt und granuliert. Nach Trocknung im Vakuum bei 80°C (8 Stunden) wurde das Blendgranulat bei 260°C Massetemperatur und 40°C Formtemperatur zu 150 x 80 x 2 mm Platten spritzgegossen. Die aus diesen Platten ausgefrästen Prüflinge wurden anschließend 10 Tage bei 70°C und 60 % relativer Luftfeuchte konditioniert. Es wurden folgende mechanischen Prüfungen durchgeführt:
Bestimmung des Biege-E-Moduls nach DIN 53 457 (1987) an 50 x 10 x 2 mm Prüflingen bei 23°C; Bestimmung der Doppel-V-Schlagbiegefestigkeit nach DIN 53 753 (1981) an 50 x 6 x 2 mm Prüflingen bei 23°C; Bestimmung von Schädigungsarbeit (Wmax) und Durchstoßarbeit (Wges) beim Durchstoßversuch nach DIN 53 443/Teil 2 (1984) an 150 x 80 x 2 mm Platten bei 23°C. Die mechanischen Eigenschaftswerte sind in Tabelle 1 zusammengestellt.

### Vergleichsbeispiel V5:

Analog zu den in Beispiel 5 angeführten Bedingungen und Mischungsverhältnissen wurde ein IPP/PA 6-Blend unter Verwendung des in Vergleichsbeispiel V1 beschriebenen, nicht erfingungsgemäßen MSA-gepfropften IPP hergestellt: 3000 g IPP (60 Gew.%), 1750 g PA 6 (35 Gew.%) und 250 g MSA-gepfropftes IPP (gemäß Vergleichsbeisplel V1; 5 Gew.%). Die ermittelten mechanischen Eigenschaftswerte sind in Tabelle 1 aufgeführt.

### Beispiel 6:

Analog zu den in Beispiel 5 angeführten Bedingungen wurde ein IPP/PA 6-Blend im Mischungsverhältnis (IPP/PA 6/VM) von 75/20/5 Gew.% unter Verwendung des in Beispiel 1 beschriebenen MSA-gepfropften ELPP als Verträglichkeitsvermittler hergestellt: 3750 g (75 Gew.%) IPP, 1000 g (20 Gew.%) Polyamid 6 und 250 g (5 Gew.%) ELPP-Pfropfcopolymer gemäß Beispiel 1.
Die mechanischen Eigenschaftswerte des Blends sind in Tabelle 1 aufgeführt.

### Vergleichsbeispiel V6:

Analog zu den in Beispiel 6 angeführten Bedingungen wurde ein IPP/PA 6-Blend im Mischungsverhältnis (IPP/PA 6/VM) von 75/20/5 Gew.% unter Verwendung des in Vergleichsbeispiel V1 beschriebenen MSA-gepfropften IPP als Verträglichkeitsvermittler hergestellt: 3750 g (75 Gew.%) IPP, 1000 g (20 Gew.%) Polyamid 6 und 250 g (5 Gew.%) IPP-Pfropfcopolymer aus Vergleichsbeispiel V1.
Die mechanischen Eigenschaftswerte des Blends sind in Tabelle 1 aufgeführt.

### Beispiel 7:

IPP/Polyamid 6-Blend unter Verwendung des ELPP-Pfropfcopolymeren aus Beispiel 2 als Verträglichkeitsvermittler, Blendzusammensetzung (IPP/PA6/VM) 45/50/5.

In einem Brabender-Plasticorder mit elektrisch beheizbarer 50 ml-Knetkammer wurde eine Mischung aus 18 g (45 Gew.%) IPP (Daplen BE 50, PCD Polymere, MFI: 0,3), 20 g (50 Gew.%) Polyamid 6 (SH3, Fa. Leuna-Werke, Viskositätszahl nach DIN 53727: 150 ccm/g in 96 %iger Schwefelsäure) und 2 g (5 Gew.%) ELPP-Pfropfcopolymeres aus Beispiel 2 bei 260°C Kammertemperatur bei laufenden Knetern (60 U/min) eingefüllt, fünf Minuten geknetet und anschließend aus der Knetkammer entfernt. Der Blend wurde bei 260°C zu einer 200 x 80 x 2 mm Preßplatte verarbeitet, aus der 50 x 10 x 2 mm Prüfstäbe zur Bestimmung des Biege-E-Moduls ausgefräst wurden. Der Biege-E-Modul ist in Tabelle 1 angeführt.

### Vergleichsbeispiel V7:

Analog zu den in Beispiel 7 angeführten Bedingungen wurde ein IPP/Polyamid 6-Blend unter Verwendung des IPP-Pfropfcopolymeren aus Vergleichsbeispiel V2 als Verträglichkeitsvermittler hergestellt. Blendzusammensetzung (IPP/PA 6/VM) 45/50/5: 18 g (45 Gew.%) IPP (MFI: 0,3), 20 g (50 Gew.%) Polyamid 6 und 2 g (5 Gew.%) IPP-Pfropfcopolymeres aus Vergleichsbeispiel V2.
Das Biege-E-Modul ist in Tabelle 1 angeführt.

### Beispiel 8:

IPP/Polyethylenterephthalatblend (PET) unter Verwendung des ELPP-Pfropfcopolymeren aus Beispiel 3 als Verträglichkeitsvermittler.
Analog zu Beispiel 7 wurde ein Blend aus 18 g (45 Gew.%) IPP, 20 g (50 Gew.%) PET (Polyclear F, Fa. Hoechst, MW: 60.000) und 2 g (5 Gew.%) ELPP-Pfropfcopolymeres aus Beispiel 3 hergestellt. Der Biege-E-Modul ist in Tabelle 1 angeführt.

### Vergleichsbeispiel V8:

Analolg zu den in Beispiel 8 angeführten Bedingungen wurde ein IPP/Polyethylenterephthalatblend unter Verwendung des IPP-Pfropfcopolymeren aus Vergleichsbeispiel V3 als Verträglichkeitsvermittler hergestellt.
Blendzusammensetzung (IPP/PET/VM) 45/50/5: 18 g (45 Gew.%) IPP (MFI: 0,3), 20 g (50 Gew.%) PET und 2 g (5 Gew.%) IPP-Pfropfcopolymeres aus Vergleichsbeispiel V3.
Der Biege-E-Modul ist in Tabelle 1 angeführt.

### Beispiel 9:

Herstellung eines IPP/Polycarbonatblend (PC) unter Verwendung des ELPP-Pfropfcopolymeren aus Beispiel 3 als Verträglichkeitsvermittler. Analog zu Beispiel 7 wurde ein Blend aus 18 g (45 Gew.%) IPP, 20 g (50 Gew.%) PC (Lexan PK 1340, Fa. General Electric, MVR ( melt volume flow rate gemäß ISO 1133, 300°C/1,2 kg): 6 ml/10 min) und 2 g (5 Gew.%) ELPP-Pfropfcopolymeres aus Beispiel 3 hergestellt. Der Biege-E-Modul ist in Tabelle 1 angeführt.

### Vergleichsbeispiel V9:

Analog zu den in Beispiel 9 angeführten Bedingungen wurde ein IPP/Polycarbonatblend unter Verwendung des IPP-Pfropfcopolymeren aus Vergleichsbeispiel V3 als Verträglichkeitsvermittler hergestellt.
Blendzusammensetzung (IPP/PC/VM) 45/50/5: 18 g (45 Gew.%)IPP (MFI: 0,3) 20 g (50 Gew.%) PC und 2 g (5 Gew.%) IPP-Pfropfcopolymeres aus Vergleichsbeispiel V3.
Der Biege-E-Modul ist in Tabelle 1 angeführt.

### Beispiel 10:

Herstellung eines IPP/Polystyrenblend (PS) unter Verwendung des ELPP-Pfropfcopolymeren aus Beispiel 4 als Verträglichkeitsvermittler. Analog zu Beispiel 7 wurde ein Blend aus 18 g (45 Gew.%) IPP, 20 g (50 Gew.%) PS (PSH 165, Fa. BASF, Viskositätszahl gemäß ISO 1628/1 (1984) 119 ml/g) und 2 g (5 Gew.%) ELPP-Pfropfcopolymeres aus Beispiel 4 hergestellt.
Der Biege-E-Modul ist in Tabelle 1 angeführt.

### Vergleichsbeispiel V10:

Analog zu den in Beispiel 10 angeführten Bedingungen wurde ein IPP/Polystyrenblend unter Verwendung des IPP-Pfropfcopolymeren aus Vergleichsbeispiel V4 als Verträglichkeitsvermittler hergestellt.
Blendzusammensetzung (IPP/PS/VM) 45/50/5: 18 g (45 Gew.%) IPP (MFI: 0,3), 20 g (50 Gew.%) PS und 2 g (5 Gew.%) IPP-Pfropfcopolymeres aus Vergleichsbeispiel V4.
Der Biege-E-Modul ist in Tabelle 1 angeführt.

Aus den in Tabelle 1 zusammengestellten Meßwerten ist zu erkennen, daß die Blends bei Verwendung von erfindungsgemäßen Verträglichkeitsvermittlern eine viel geringere Steifigkeit besitzen (geringerer E-Modul) und weit bessere Zähigkeitseigenschaften (Fallbolzentest und Doppel-V-Kerbschlagzähigkeit) aufweisen als bei Verwendung von bekannten Verträglichkeitsvermittlern.

**Tabelle 1:**

| Eigenschaften der Blends | | | | | | | | |
|---|---|---|---|---|---|---|---|---|
| Bsp. | Blend | VM aus Bsp. | E-Modul (MPa) | | FB (J) | | DV (kJ/m²) | |
| | | | l | q | Wmax. | Wges | l | q |
| 5 | PP/PA | 1 | 985 | 1010 | 6 | 9 | 44,6 | 9 |
| V5 | PP/PA | V1 | 1405 | 1289 | 5,3 | 7,8 | 22,7 | 2,4 |
| 6 | PP/PA | 1 | 1134 | 1082 | 22 | 23 | 48,1 | 5,2 |
| V6 | PP/PA | V1 | 1298 | 1276 | 2,2 | 3,6 | 32,8 | 4,7 |
| 7 | PP/PA | 2 | 1552 | | | | | |
| V7 | PP/PA | V2 | 2061 | | | | | |
| 8 | PP/PET | 3 | 1795 | | | | | |
| V8 | PP/PET | V3 | 2277 | | | | | |
| 9 | PP/PC | 3 | 1442 | | | | | |
| V9 | PP/PC | V3 | 1580 | | | | | |
| 10 | PP/PS | 4 | 1683 | | | | | |
| V10 | PP/PS | V4 | 1953 | | | | | |

- E-Modul: Biegeelastizitätsmodul gemäß DIN 53 457 (1987)
- FB: Fallbolzentest gemäß DIN 53 443 (1984) Teil 2 (23°C)
- Wmax: Arbeit bei Maximalkraft
- Wges: Gesamtarbeit
- DV: Doppel-V-Kerbschlagzähigkeit gemäß DIN 53 753 (1981)
- (l): Prüfung längs zur Verarbeitungsrichtung
- (q): Prüfung quer zur Verarbeitungsrichtung

- PP: Polypropylen
- PA: Polyamid
- PET: Polyethylenterephthalat
- PC: Polycarbonat
- PS: Polystyrol
- VM: Verträglichkeitsvermittler

## Patentansprüche

1. Mit ethylenisch ungesättigten Pfropfmonomeren modifizierte elastomere Polypropylene mit stereoregulärer Blockanordnung im Kettenaufbau (ELPP) und deren Mischungen mit isotaktischen Polypropylenen (IPP), die mit ethylenisch ungesättigten Pfropfmonomeren modifiziert sind.

2. Modifizierte ELPP und deren Mischungen gemäß Anspruch 1, dadurch gekennzeichnet, daß die Pfropfmonomeren der Gruppe der ethylenisch ungesättigten aliphatischen oder aromatischen Carbonsäuren oder deren Derivaten angehören.

3. Modifizierte ELPP und deren Mischungen gemäß Anspruch 1 oder 2, dadurch gekennzeichnet, daß die Pfropfmonomeren der Gruppe der Maleinsäure oder deren Derivaten, Acrylsäure oder deren Derivaten, Methacrylsäure oder deren Derivaten angehören.

4. Modifizierte ELPP und deren Mischungen gemäß Anspruch 1, dadurch gekennzeichnet, daß die Pfropfmonomeren der Gruppe der Vinylaromaten oder Vinylalkoholester angehören.

5. Modifizierte ELPP und deren Mischungen gemäß einem der Ansprüche 1 bis 4, dadurch gekennzeichnet, daß ihr Gehalt an Pfropfmonomeren (Pfropfgrad) 0,1 bis 30 Gew.%, bevorzugt 0,5 bis 10 Gew.%, besonders bevorzugt 0,5 bis 5 Gew.% beträgt.

6. Modifizierte ELPP und deren Mischungen gemäß einem der Ansprüche 1 bis 5, dadurch gekennzeichnet, daß sie 0 bis 80 Gew.%, bevorzugt 0,5 bis 50 Gew.% modifizierte IPP enthalten.

7. Verfahren zum Modifizieren von elastomeren Polypropylenen mit stereoregulärer Blockanordnung im Kettenaufbau (ELPP) oder deren Mischungen mit isotaktischen Polypropylenen (IPP), dadurch gekennzeichnet, daß ELPP oder Mischungen aus ELPP und IPP mit ethylenisch ungesättigten Pfropfmonomeren gepfropft werden.

8. Verwendung von modifzierten ELPP und/oder deren Mischungen mit modifzierten IPP gemäß einem der Ansprüche 1 bis 7 als Verträglichkeitsvermittler in Blends aus Polyolefinen mit nichtolefinischen Thermoplasten.

9. Verwendung von modifizierten ELPP und/oder deren Mischungen mit modifizierten IPP gemäß einem der Ansprüche 1 bis 7 als Haftvermittler in Verbunden bzw. Laminaten aus Polyolefinen und Metallen.

10. Blend aus Polyolefinen und nicht olefinischen Thermoplasten, dadurch gekennzeichnet, daß er als Verträglichkeitsvermittler modifizierte ELPP und/oder deren Mischungen mit modifizierten IPP gemäß einem der Ansprüche 1 bis 9 enthält.

## Claims

1. Elastomeric polypropylenes, modified with ethylenically unsaturated graft monomers and having a stereoregular block arrangement in the chain structure (ELPP), and blends thereof with isotactic polypropylenes (IPP), which are modified with ethylenically unsaturated graft monomers.

2. Modified ELPP and blends thereof according to Claim 1, characterized in that the graft monomers belong to the group consisting of the ethylenically unsaturated aliphatic or aromatic carboxylic acids or derivatives thereof.

3. Modified ELPP and blends thereof according to Claim 1 or 2, characterized in that the graft monomers belong to the group consisting of maleic acid or derivatives thereof, acrylic acid or derivatives thereof or methacrylic acid or derivatives thereof.

4. Modified ELPP and blends thereof according to Claim 1, characterized in that the graft monomers belong to the group consisting of the vinyl aromatics or esters of vinyl alcohol.

5. Modified ELPP and blends thereof according to one of Claims 1 to 4, characterized in that the content of graft monomers (degree of grafting) is 0.1 to 30% by weight, preferably 0.5 to 10% by weight, particularly preferably 0.5 to 5% by weight.

6. Modified ELPP and blends thereof according to one of Claims 1 to 5, characterized in that they contain 0 to 80% by weight, preferably 0.5 to 50% by weight, of modified IPP.

7. Process for the modification of elastomeric polypropylenes having a stereoregular block arrangement in the chain structure (ELPP) or blends thereof with isotactic polypropylenes (IPP), characterized in that ELPP or blends of ELPP and IPP are grafted with ethylenically unsaturated graft monomers.

8. Use of modified ELPP and/or blends thereof with modified IPP according to one of Claims 1 to 7 as compatibilizers in blends of polyolefins with nonolefinic thermoplastics.

9. Use of modified ELPP and/or blends thereof with modified IPP according to one of Claims 1 to 7 as adhesion promoters in composites or laminates of polyolefins and metals.

10. Blend of polyolefins and nonolefinic thermoplastics, characterized in that it contains, as compatibilizer, modified ELPP and/or blends thereof with modified IPP according to one of Claims 1 to 9.

## Revendications

1. Polypropylènes élastomères modifiés avec des monomères de greffage éthyléniquement insaturés, ayant un agencement stéréorégulier des séquences dans la structure de la chaîne, (ELPP), et leurs mélanges avec des polypropylènes isotactiques (IPP), qui sont modifiés avec des monomères de greffage éthyléniquement insaturés.

2. ELPP modifiés et leurs mélanges selon la revendication 1, caractérisés en ce que les monomères de greffage appartiennent à l'ensemble constitué par les acides carboxyliques aliphatiques ou aromatiques éthyléniquement insaturés ou leurs dérivés.

3. ELPP modifiés et leurs mélanges selon la revendication 1 ou 2, caractérisés en-ce que les monomères de greffage appartiennent à l'ensemble constitué par l'acide maléique ou ses dérivés, l'acide acrylique ou ses dérivés, et l'acide méthacrylique ou ses dérivés.

4. ELPP modifiés et leurs mélanges selon la revendication 1, caractérisés en ce que les monomères de greffage appartiennent à l'ensemble constitué par les composés aromatiques vinyliques ou les esters de l'alcool vinylique.

5. ELPP modifiés et leurs mélanges selon l'une des revendications 1 à 4, caractérisés en ce que leur teneur en monomères de greffage (taux de greffage) est de 0,1 à 30 % en poids, de préférence de 0,5 à 10 %, et de façon particulièrement préférée de 0,5 à 5 % en poids.

6. ELPP modifiés et leurs mélanges selon l'une des revendications 1 à 5, caractérisés en ce qu'ils contiennent de 0 à 80 % en poids, de préférence de 0,5 à 50 % en poids, de IPP modifiés.

7. Procédé pour modifier des polypropylènes élastomères ayant un agencement stéréorégulier des séquences dans la structure de la chaîne (ELPP) ou leurs mélanges avec des polypropylènes isotactiques (IPP), caractérisé en ce qu'on greffe les ELPP ou des mélanges de ELPP et de IPP avec des monomères de greffage éthyléniquement insaturés.

8. Utilisation de ELPP modifiés et/ou de leurs mélanges avec des IPP modifiés selon l'une des revendications 1 à 7 comme agents de compatibilité dans des mélanges de polyoléfines avec des matières thermoplastiques non oléfiniques.

9. Utilisation de ELPP modifiés et/ou de leurs mélanges avec des IPP modifiés selon l'une des revendications 1 à 7 comme agents de pontage dans des composites et des stratifiés de polyoléfines et de métaux.

10. Mélange de polyoléfines et de matières thermoplastiques non oléfiniques, caractérisé en ce qu'il contient, comme agents de compatibilité, des ELPP modifiés et/ou des mélanges de ceux-ci avec des IPP modifiés selon l'une des revendications 1 à 9.
